# EUROPÄISCHE PATENTANMELDUNG

(11) **EP 1 034 701 A1**
(43) Veröffentlichungstag der Anmeldung: **13.09.2000**
(21) Anmeldenummer: 00105006.1
(22) Anmeldetag: 09.03.2000
(51) Int. Cl.: A01N 37/00, D06M 16/00

(54) **Flächiges Gebilde und Verfahren sowie Mittel zu seiner Herstellung**

(30) Priorität: 09.03.1999 DE 29904320 U; 09.03.1999 DE 19910355
(71) Anmelder: Arconia GmbH, 7002 Chur (CH)
(72) Erfinder: Kern, Ralf M., 82057 Icking bei München (DE)
(74) Vertreter: Kern, Ralf M., Dipl.-Ing.

(57) **Zusammenfassung**

Es handelt sich um ein flächiges Gebilde, wie z.B. ein Tuch auf der Basis von Papier-, Kunststoff-, Textilmaterial oder dergleichen oder eine Textilie wie z.B: ein Wäschestück, welches mit einem entkeimenden Mittel aus untoxischen umwelt- und haut- sowie schleimhautschonenden und biologisch voll abbaubaren Bestandteilen versehen ist und ein Verfahren sowie Mittel zu seiner Herstellung.

## Beschreibung

Die Erfindung betrifft ein flächiges Gebilde, wie z.B. ein Tuch auf der Basis von Papier-, Kunststoff, Textilmaterial oder dergleichen oder eine Textilie wie z.B. ein Wäschestück und Verfahren sowie Mittel zu seiner Herstellung. Derartige flächige Gebilde, welche keimfrei bzw. entkeimend sind, werden bisher dadurch hergestellt, dass sie mit stark aggressiven Mitteln behandelt werden. Dies führt zu Gesundheitschädigungen, wenn das flächige Gebilde mit einem Menschen in Berührung kommt.

Auch bei modernen Reinigungsanlagen besteht das Problem, dass die in Lösungsmittel gereinigten und anschließend getrockneten Textilien, insbesondere auch Kleidungsstücke und notwendigerweise keimfreie Wäsche wie OP-Kleidung nur mit stark umweltschädigenden Mitteln behandelt werden können. Aber auch nach anderen Verfahren, z.B. nur auf Wasserbasis mit z.B. normaler Waschmaschine gereinigten Textilien sind im fertigen Zustand unzulässig stark verkeimt und auch geruchsbelastet.

Aufgabe der Erfindung ist es, ein derartiges flächiges Gebilde zu schaffen, welches auf wirtschaftliche Weise völlig untoxisch sowie biologisch abbaubar eine starke entkeimende Wirkung aufweist und dadurch chemisch unschädlich auf allen Gebieten der menschlichen oder Hygiene- sowie Lebensmittelbereichs einsetzbar ist, und die genannten Nachteile auszuschalten und keimreduzierte bzw. entkeimte Textilien mit einem völlig untoxischen (Trinkwasserklasse 0) und vollständig biologisch abbaubaren und hautfreundlichen Mittel zu erreichen.

Dies wird überraschenderweise mit einem Mittel erreicht, das gemäß den Ansprüchen in vergleichsweise schwach konzentrierter Mischungskonzentration zusammengesetzt ist, bei dem die Mischungskomponenten in synergistisch zusammenwirkender Form wirksam sind.

Die mit dem erfindungsgemäßen Mittel gereinigten Textilien weisen alle Vorteile einer mindestens weitgehenden Entkeimung auf.

Überraschenderweise hat sich die Zugabe eines Mittels mit im wesentlichen folgenden Zusammensetzungs-Komponenten als kurzfristig intensiv desodorierend und Keim-reduzierend und damit als vorteilhafte Lösung bei der Behandlung mit einer Mittelkombination.

Besonders überraschend für die Wirksamkeit des Mittels ist, dass die zu reinigenden bzw. zu waschenden Textilien im hochkontaminierten Zustand pH-Werte von 6,0 bis z.T. 7 und noch darüber aufweisen können und das Mittel selbst bei rein biologischer Zusammensetzung z.T. alkalischen Komponenten eine gründlichen Entkeimung und vollständige Geruchseliminierung bewirkt.

Das Lebensmittelkonservierungsmittel kann vorteilhafterweise ausgewählt sein aus der Gruppe bestehend aus Citronensäure, Natriumbenzoat, Weinsäure, Milchsäure, Apfelsäure, Essigsäure, Bernsteinsäure, Acetylsalicylsäure und L-Ascorbinsäure, Sorbinsäure, Benzoesäure, p-Hydroxybenzoesäure, Ameisensäure und Propionsäure sowie deren Abkömmlingen, eingeschlossen Salze und Estern derselben.

Die mit dem Mittel erzielte synergistische Wirkung wird durch die Zumischung von sauerstoffabgebenden Stoffen verstärkt.

Die Erfindung erfasst die in den Ansprüchen enthaltenen spezielle Ausführungsformen, wobei die in Wasser gelöste Mischungskombination bei einem pH-Wert zwischen etwa 2 bis 7 liegt.

Zwecks wirkungsverstärkender Durchdringung und verbesserter Benetzung können der Mischung.

1,0 bis 5 % eines oder mehrerer Tenside ausgewählt aus der Gruppe bestehend aus in der verwendeten Menge untoxischen anionischen und nichtionischen Tensiden, Seifen, Fettsäure-Aminocarbonsäurekondensate, Alkylbenzolsulfonate, Ligninsulfonate, Alkylsulfonate, Fettsäureestern, sulfatierten Fettsäureglyceriden, Betaine, Sulfobetaine, Saponine, Fettsäureester von Polyalkoholen, Oxyäthylierte Fettsäuren, etc., von denen Natriumdodecylsulfonat und Natriumlaurylsulfat besonders bevorzugt sind, beigefügt sein.

Es kann erfindungsgemäß sinnvoll sein, dass das Behandlungs-Mittel zusätzlich ein oder mehrere von Materialien ausgewählt aus der Gruppe bestehend aus lebensmittelrechtlich unbedenklichen Stabilisatoren, Trocknungsmittel, Säuerungsmittel, Korrosionsinhibitoren, Emulgatoren, Sprengmittel und/oder Tenside enthält.

Ein entscheidender Vorteil der erfindungsgemäß gereinigten bzw. gewaschenen Wäsche liegt darin, dass man das Mittel nicht nur bis zur Entkeimung der Wäsche selbst dosieren kann, sondern in einem Überschuß davon, so dass von der fertig gereinigten Wäsche selbst eine länger andauernde, zusätzliche entkeimende Wirkung ausgeht, die nicht nur in keimempfindlichen Situationen (z.B. im OP-Saal oder Binden, Wundtücher) zusätzlich entkeimend wirkt. Dabei ist das Mittel selbst absolut hautfreundlich und die gereinigte Wäsche wirkt selbst als Medium der Entkeimung.

Insbesondere zur Vermeidung einer Nachverkeimung hat es sich als vorteilhaft herausgestellt, wenn die Wasch- oder Spülflüssigkeit mindestens ein wasserlösliches Silbersalz aufweist, das eine Nachverkeimung verhindert bzw. die Wirkungsdauer erheblich verlängert. Der Gehalt an Silbersalzen beträgt vorteilhafterweise zwischen weniger als 0,2 bis 0,5 Gew.% des Mittels als Trockenmasse.

Um das Lösungsverhalten weiter günstig zu beeinflussen, kann es sinnvoll sein, MgCl₂ einzusetzen, das durch lonenaustausch mit anderen zweiwertigen Salzen die Lösung der Ablagerungen zweiwertiger lonen fördert.

Dadurch, dass nun Citronensäure mit ihren günstigen Lösungseigenschaften gemeinsam mit Silberverbindungen, wie -salzen, die gegen ein Wachstum von Keimen eingesetzt werden, kann bei einer überraschend guten unabhängigen Entkeimungswirkung auch die Nachverkeimung herabgesetzt werden.

Die Wirkung des erfindungsgemäßen Mittels ist vor allem deshalb überraschend, weil es den Wasch- und Spülflüssigkeiten nur in wenigen Prozent oder auch nur in Bruchteilen von Prozenten zum Desodorieren und Entkeimen zugesetzt zu werden braucht, obwohl es aus nachweislich völlig untoxischen, biologisch verträglichen und biologisch völlig abbaubaren Bestandteilen ohne jegliche Chlor-und Halogenbestandteile und auch ohne jegliche Antibiotika, Pestizide, Fungizide und Insektizide zusammengesetzt ist und in vergleichsweise kurzer Zeit und zeitlich lang anhalten wirksam ist.

Das Mittel ist sowohl völlig untoxisch als auch vollständig biologisch abbaubar und hautschonend. Es baut sogar aufgrund seiner fungiziden Wirkung Antibiotika ab und löst keinerlei Resistenzerscheinungen aus.

Das Mittel wirkt gegen Keime wie Bakterien (bakterizid), Pilze wie Schimmelpilze (fungizid), Pilzsporen und Blütenstaub, Hefen, Protozoen, Eukaryoten, Eiweißmoleküle, Enzyme, Makrophagen und auch molekular-biologische Schädlinge oder dergleichen,
Parasiten durch Zerstörung deren Nachwuchs und Eier, sowie Biofouling und Epelithionbildung.

Konkret ist das erfindungsgemäße Mittel auch gegen sämtliche Arten von Aspergillus, Legionellen und Salmonellen, sowie
Escherichia coli,
Klebsielle pneumoniae,
Staphylococcus aureus,
Pseudomonas aeruginosa,
Streptococcus faecalis,
Proteus mirabilis,
Mycobacterium tuberculosis,
Clostridium sporogenes,
Candida albicans
mit bis zu völliger Entkeimung erprobt.

Bei dem erfindungsgemäßen Reinigungs- bzw. Waschverfahren mit Lösungsmittel kann das Mittel der Reinigungs-flüssigkeit sowohl in gelöster flüssiger Form, als auch in fester Konsistenz zugesetzt werden, bevorzugt aber aus z.B. wirtschaftlichen Gründen in der Spül- und Trockenstufe. Die Entkeimungswirkung ist dabei stark genug, um die fertig gereinigten Textilien zumindest ausreichend keimfrei bzw. keimarm zu machen und darüberhinaus noch mit eigener Entkeimungswirkung auszustatten.

Diese Kondition der Textilien wird auch durch ein anschließendes Bügeln oder Pressen nicht beeinträchtigt. Im Gegenteil kann dabei der Bügelfeuchtigkeit das entkeimende Mittel zugegeben werden. Dabei können die Umgebungsbedingungen durch diese Vorgänge mit dem mit dem Enkeimungsmittel behandelten Textilien merklich verbesserte, arbeitsbegünstigende Keimverarmung erfahren.

Diese Wirkung kann noch länger anhaltend gestaltet werden, wenn die Textilien mit einer Imprägnierung gemäß Anspruch 18 versehen werden.

Mit dem erfindungsgemäßen Verfahren kann jede Art von Textilien, vor allem aber keimkritische Textilien (Krankenhaus-, OP- und Reinstraumtextilien) erfindungsgemäß mindestens stark keimreduzierend gereinigt werden.

## Patentansprüche

1. Flächiges Gebilde, wie z.B. ein Tuch auf der Basis von Papier-, Kunststoff-, Textilmaterial oder dergleichen oder wie eine Textilie wie z.B. ein Wäschestück, dadurch gekennzeichnet, dass es mit einem entkeimenden Mittel aus untoxischen, umwelt- und haut, sowie schleimhautschonenden und biologisch voll abbaubaren Bestandteilen versehen ist.

2. Flächiges Gebilde nach Anspruch 1, dadurch gekennzeichnet, dass es mit dem entkeimenden Mittel imprägniert ist.

3. Flächiges Gebilde nach Anspruch 1, dadurch gekennzeichnet, dass es mit dem entkeimenden Mittel mindestens einseitig versehen ist.

4. Flächiges Gebilde nach Anspruch 1, dadurch gekennzeichnet, dass es mit dem entkeimenden Mittel z.B. durch Aufbringen mittels Aufsprühen, Eintauchen oder Bedampfen, insbesondere während eines Wasch- bzw. Spül-oder Trocknervorgangs versehen ist.

5. Verfahren zur Herstellung eines flächigen Gebildes nach einem der Ansprüche 1 - 4, dadurch gekennzeichnet, dass es mit dem entkeimenden Mittel z.B. durch Aufbringen mittels Aufsprühen, Eintauchen oder Bedampfen, insbesondere während eines Wasch- bzw. Spül- oder Trocknervorgangs versetzt wird.

6. Verfahren nach Anspruch 5, dadurch gekennzeichnet, dass das Mittel in der Spül- und/oder Trocknerphase im Reinigungsvorgang beigefügt wird.

7. Entkeimungsmittel zur Herstellung eines flächigen Gebildes nach einem der Ansprüche 1 -4 oder zur Durchführung des Verfahrens nach Anspruch 5 oder 6, dadurch gekennzeichnet, dass es als desodorierendes und stark keimreduzierendes Mittel, einen oder mehrere Lebensmittelkonservierungsstoffe sowie mindestens eine nicht toxische, insbesondere organische Säure aufweist.

8. Entkeimungsmittel nach Anspruch 7, welches mindestens eine Kombination einer oder mehrerer Verbindungen aus der Gruppe der Verbindungen Citronensäure, Sorbinsäure, L-Ascorbinsäure und/oder Acetylsalicylsäure oder deren Derivate aufweist
mit mindestens einem Lebensmittelkonservierungsstoff wie beispielsweise Benzoesäure und deren Derivate wie
Sorbinsäure, Citronensäure, Weinsäure, Milchsäure, Apfelsäure, Essigsäure, Bernsteinsäure, Acetysalicyl- und L-Ascorbinsäure sowie
Natriumbenzoat, p-Hydroxybenzoesäure, Ameisensäure, Propionsäure und Abkömmlinge sowie Salze, Ester und/oder Mischungen derselben.

9. Entkeimungsmittel nach Anspruch 7, dadurch gekennzeichnet, dass es einen Anteil eines Oxidationsmittels wie eine Perverbindung aus Z.B. einem Peroxid, wie Natrium-, Kalium-, Calcium- oder Wasserstoffperoxid oder einen Abkömmling einer Persäure wie Perboat, Perphosphat, Percarbonat oder eine stark oxidierende Verbindung wie ein Permanganat aufweist.

10. Entkeimungsmittel nach einem der Ansprüche 7 bis 9, dadurch gekennzeichnet, dass die Kombination von 50 bis 80 Gew. % bevorzugt 55 bis 70 Gew. %, insbesondere 690 bis 65 Gew.% Citronensäure, 20 bis 50 Gew.%, bevorzugt 30 bis 45 Gew.%, insbesondere 35 bis 40 Gew.% einer festen Peroxoverbindung, sowie 0,3 bis 1 Gew.% eines Lebensmittelkonservierungsstoffes aufweist, wobei die Summe aller Prozentsätze jeweils 100 ist.

11. Entkeimungsmittel nach Anspruch 10, dadurch gekennzeichnet, dass die Citronensäure bis zu 1 bis 25 Gew.% der Gesamtmenge durch L-Ascorbinsäure und/oder Acetylsalicylsäure ersetzt ist.

12. Entkeimungsmittel nach einem der Ansprüche 7 bis 9 in wässriger Lösung von 15 - 0,03 g Mittel, bevorzugt 10 - 0,1 g, insbesondere 8 - 0,1 g Mittel pro Liter Wasser.

13. Entkeimungsmittel nach einem der Ansprüche 7 bis 9, gekennzeichnet durch 0,05 - 10 g, bevorzugt 0,2 - 6 g und besonders bevorzugt 0,3 - 4 g Natriumbenzoat und 0,1 - 10 g, bevorzugt 0,2 - 5 g und besonders bevorzugt 0,3 - 3 g Sorbinsäure.

14. Entkeimungsmittel nach einem der Ansprüche 7 bis 9 mit zusätzlich 0,001 - 16, vorzugsweise 12, insbesondere 10 Vol.-% H₂O₂ pro Liter Wasser sowie gegebenenfalls Stabilisatoren für die Peroxidverbindung.

15. Entkeimungsmittel nach einem der vorhergehenden Ansprüche 7 bis 14, dadurch gekennzeichnet, dass die Lösung einen sauren PH-Wert zwischen ewas 2 und 7 aufweist.

16. Entkeimungsmittel, insbesondere nach einem der vorhergehenden Ansprüche, gekennzeichnet durch 0,1 bis 5% eines oder mehrerer Tenside ausgewählt aus der Gruppe bestehend aus in der verwendeten Menge untoxischen anionischen und nichtionischen Tensiden, Seifen, Fettsäure-Aminocarbonsäurekondensate, Alkylbenzolsulfonate, Ligninsulfonate, Alkylsulfonate, Fettsäureestern, sulfatierten Fettsäuregliycerilden, Polykalkoholen, Oxyäthylierte Fettsäuren, etc., und insbesondere Natriumdodecylsulfonat und Natriumlaurylsulfat.

17. Entkeimungsmittel nach einem der vorhergehenden Ansprüche, dadurch gekennzeichnet, dass die organischen Säuren gesättigte oder ungesättigte Carbonsäuren mit 1-14 C-Atomen, bevorzugt 1-12 Atomen sind.

18. Entkeimungsmittel nach einem der vorhergehenden Ansprüche, dadurch gekennzeichnet, dass ihm ein Korrosionsschutzmittel vorzugsweise in 0,1 bis 1 Gew.% in der bei der Behandlung verwendeten Konzentration der Lösung zugesetzt ist.

19. Entkeimungsmittel nach einem der vorhergehenden Ansprüche 7 bis 18, dadurch gekennzeichnet, dass ihm ein wasserlösliches Silbersalz in einem Anteil von vorzugsweise weniger als 0,2 bis 0,5% der Trockenmasse zugesetzt ist.

20. Entkeimungsmittel nach einem der vorhergehenden Ansprüche, dadurch gekennzeichnet, dass ihm eine imprägnierende faserumhüllende Komponente, z.B. Wachs beigefügt ist.
